# EUROPEAN PATENT APPLICATION

(11) **EP 4 588 732 A1**
(43) Date of publication of application: **23.07.2025**
(21) Application number: 23864447.0
(22) Date of filing: 30.06.2023
(51) Int. Cl.: B60S 5/06, B60L 53/80

(54) **BATTERY SWAPPING CONTROL METHOD AND SYSTEM, AND COMPUTER DEVICE AND COMPUTER-READABLE STORAGE MEDIUM**

(30) Priority: 14.09.2022 CN 202211116988
(71) Applicant: Nio Technology (Anhui) Co., Ltd, Hefei City, Anhui 230601 (CN)
(72) Inventor: WANG, Shuai, Shanghai 201804 (CN); ZHENG, Feifei, Shanghai 201804 (CN); XU, Huazhen, Shanghai 201804 (CN); LI, Zhibin, Shanghai 201804 (CN); ZOU, Jiyong, Shanghai 201804 (CN); LUO, Jianglong, Shanghai 201804 (CN)
(74) Representative: Vossius & Partner Patentanwälte Rechtsanwälte mbB
(86) International application number: PCT/CN2023/104727
(87) International publication number: WO 2024/055710

(57) **Abstract**

A battery swapping control method and system, a computer device, and a computer-readable storage medium. The battery swapping control method includes: acquiring visual data of a vehicle for battery swapping, where the visual data includes position data of battery holes of a traction battery of the vehicle for battery swapping; on the basis of the position data of the battery holes, determining whether the position of the vehicle for battery swapping meets conditions for performing a battery swapping operation on the vehicle; and if the position of the vehicle for battery swapping meets the conditions, a battery swap trolley performing the battery swapping operation on the vehicle for battery swapping.

## Description

### Cross Reference to Related Application

The present application claims the priority to Chinese Patent Application No. CN 202211116988.9, filed on September 14, 2022, and entitled "BATTERY SWAPPING CONTROL METHOD AND SYSTEM, AND COMPUTER DEVICE AND COMPUTER-READABLE STORAGE MEDIUM", which is incorporated herein by reference in its entirety.

### Technical Field

The invention relates to the technical field of battery swapping, and specifically provides a battery swapping control method, a control system for a battery swap trolley, a computer device, and a computer-readable storage medium.

### Technical Background

The driving range of an electric vehicle can be maintained through charging or battery swapping. Charging restores the driving range of the electric vehicle by recharging the current depleted battery, while battery swapping restores the driving range of the electric vehicle by directly replacing the current depleted battery with another fully charged one. The battery swapping process is implemented as follows: after an electric vehicle for battery swapping drives onto a battery swap platform of a battery swap station, a battery swap trolley removes the current depleted battery and transfers it to a charging compartment for recharging, while another fully charged battery is directly installed on the electric vehicle for battery swapping.

During the removal of the depleted traction battery from the electric vehicle, the battery swap trolley (such as RGV or AGV) needs to lift to a working position of the traction battery in order to unlock bolts. The battery swap trolley unlocks the traction battery as follows: battery locating pins on the battery swap trolley are inserted into holes (i.e., mounting holes which correspond to the battery locating pins and are used for mounting the traction battery to bolts on the electric vehicle) to perform an unlocking operation. However, in the event of abnormal lifting of the battery swap trolley, the battery locating pins, which are supposed to fit perfectly into the holes, may deviate and push against the traction battery. This situation poses a serious safety risk, such as: the traction battery may be damaged; and the vehicle for battery swapping may sway due to this issue while it is lifted in the air, which may cause injury to nearby personnel.

### Summary

The invention aims to at least partially solve the above technical problems, specifically to reduce the probability of the phenomenon that battery locating pins that are supposed to fit perfectly into holes may deviate and push against a traction battery when a battery swap trolley abnormally lifts, or to avoid the occurrence of this phenomenon, thereby reducing or eliminating corresponding safety risks.

In view of this, in a first aspect, the invention provides a battery swapping control method, including: acquiring visual data of a vehicle for battery swapping, where the visual data includes position data of battery holes of a traction battery of the vehicle for battery swapping; on the basis of the position data of the battery holes, determining whether the position of the vehicle for battery swapping meets conditions for performing a battery swapping operation on the vehicle; and if the position of the vehicle for battery swapping meets the conditions, a battery swap trolley performing the battery swapping operation on the vehicle for battery swapping.

Through this configuration, the possibility of misjudgment can be reduced/avoided by utilizing the position data of the battery holes.

For the battery swapping control method, in a possible implementation, the step of "on the basis of the position data of the battery holes, determining whether the position of the vehicle for battery swapping meets conditions for performing a battery swapping operation on the vehicle" includes: in the event of deviations in the position data of the battery holes being all less than a set deviation threshold, determining that the position of the vehicle for battery swapping meets the conditions for performing the battery swapping operation on the vehicle.

Through this configuration, a specific form is provided where the position of the vehicle for battery swapping meets the conditions for performing the battery swapping operation.

It should be understood that those skilled in the art can determine a deviation threshold for the battery holes according to actual needs. The deviation threshold may be a constant value or a variable, and the deviation thresholds corresponding to different battery holes may be the same or different.

For the battery swapping control method, in a possible implementation, the step of "on the basis of the position data of the battery holes, determining whether the position of the vehicle for battery swapping meets conditions for performing a battery swapping operation on the vehicle" includes: in the event of at least one of the deviations in the position data of the battery holes being greater than or equal to the set deviation threshold, determining that the position of the vehicle for battery swapping does not meet the conditions for performing a battery swapping operation on the vehicle; and if the position of the vehicle for battery swapping does not meet the conditions for performing the battery swapping operation on the vehicle, the control method includes: interrupting a current battery swapping operation; or selectively performing a secondary determination on the position of the vehicle for battery swapping, and on the basis of a result of the secondary determination, interrupting the current battery swapping operation or continuing the current battery swapping operation.

Through this configuration, a control method is provided where the position of the vehicle for battery swapping does not meet the conditions for performing the battery swapping operation on the vehicle.

It should be understood that those skilled in the art can determine, according to actual needs, the method for the secondary determination of the position of the vehicle for battery swapping, the specific implementation method, and the circumstance under which the secondary determination should be made. For example: distinguishing the degree of the current "not meeting the conditions" through more refined data, such that in the case where the degree of "not meeting the conditions" is not severe, the current battery swapping operation can continue; distinguishing the current "not meeting the conditions" through manual intervention, and if it is determined that the degree of "not meeting the conditions" is not severe, the current battery swapping operation can continue; and so on.

For the battery swapping control method, in a possible implementation, after the step of "acquiring visual data of a vehicle for battery swapping", the battery swapping control method includes: determining whether the position data corresponding to the battery holes is valid data; if the position data corresponding to the battery holes is not the valid data, during the process in which the battery locating pins of the battery swap trolley approach the battery holes, determining whether relative positions of the battery locating pins to the battery holes meet the conditions for performing the battery swapping operation on the vehicle for battery swapping.

Through this configuration, a determination control logic is provided in the event of the visual data being invalid.

It should be understood that those skilled in the art can determine a specific quantization form in which the relative positions of the battery locating pins to the battery holes meet the conditions for performing the battery swapping operation according to actual needs. For example, during the process in which the battery locating pins of the battery swap trolley approach the battery holes, the positions of the battery locating pins can be detected by proximity sensors. When both sets of proximity sensors corresponding to the battery locating pins for the two battery holes are triggered simultaneously, the battery locating pins are considered to be properly positioned, thus meeting the conditions for the battery swapping operation. At this point, the battery swap trolley can perform the battery swapping operation on the vehicle for battery swapping.

For the battery swapping control method, in a possible implementation, the step of "determining whether the relative positions of the battery locating pins to the battery holes meet the conditions for performing the battery swapping operation on the vehicle for battery swapping" includes: if the relative positions of the battery locating pins to the battery holes do not meet the conditions, continuing the movement of the battery locating pins of the battery swap trolley toward the battery holes, and determining whether the torque of the battery locating pins is greater than a set torque threshold; and if the relative positions of the battery locating pins to the battery holes meet the conditions, providing feedback information and/or interrupting the current battery swapping operation; where the torque threshold is a value lower than a set high value.

Through this configuration, situations that do not meet the conditions for battery swapping may be promptly detected by lowering the threshold, thereby effectively avoiding potential safety risks that may arise when a higher torque threshold is maintained (such as one that is roughly equivalent to the torque threshold used when visual data is valid).

For the battery swapping control method, in a possible implementation, the step of "during the process in which the battery locating pins of the battery swap trolley approach the battery holes, determining whether the relative positions of the battery locating pins to the battery holes meet the conditions for performing the battery swapping operation on the vehicle for battery swapping" includes: preliminarily determining whether the vehicle for battery swapping meets the conditions for battery swapping; if the vehicle for battery swapping meets the conditions, moving the battery locating pins of the battery swap trolley to approach the battery holes, and then during the process in which the battery locating pins of the battery swap trolley approach the battery holes, determining whether the relative positions of the battery locating pins to the battery holes meet the conditions for performing the battery swapping operation on the vehicle for battery swapping.

Through this configuration, it is possible to preliminarily determine whether the conditions for performing the battery swapping operation on the vehicle for battery swapping are met in conjunction with the relative positions of the battery locating pins to the battery holes.

It can be understood that those skilled in the art can determine a specific form of the preliminary determination according to actual needs. For example, it can be completed by means of the state or movement of the battery swap trolley and/or the structure of the vehicle for battery swapping, or it can also be completed by means of the state or movement of other structures besides the two. It can also be determined through visual observation.

For the battery swapping control method, in a possible implementation, the step of "preliminarily determining whether the vehicle for battery swapping meets the conditions for battery swapping" includes: moving a plurality of vehicle body locating pins of the battery swap trolley to approach corresponding holes of a vehicle body of the vehicle for battery swapping; and if all of the plurality of vehicle body locating pins are capable of entering the holes, then preliminarily determining that the vehicle for battery swapping meets the conditions for battery swapping.

Through this configuration, a specific implementation method for the preliminary determination is provided.

For the battery swapping control method, in a possible implementation, the step of "all of the plurality of vehicle body locating pins being capable of entering the holes" includes: the torque of the plurality of vehicle body locating pins during the process of entering the holes being less than or equal to a preset torque threshold.

Through this configuration, a specific method is provided for determining that the vehicle body locating pins are capable of entering the holes.

It should be understood that since during the process in which the vehicle body locating pins enter the holes, the part pushed by the vehicle body locating pins is not the part of the traction battery. Therefore, the torque threshold referred to here can theoretically be greater than the foregoing torque threshold for the battery locating pins.

In a second aspect, the invention provides a computer-readable storage medium, which includes a memory, where the memory is configured to store a plurality of program codes, and the program codes are configured to be loaded and run by a processor to execute the battery swapping control method according to any one of the foregoing.

It can be understood that the computer-readable storage medium encompasses all technical effects of the battery swapping control method according to any one of the foregoing, which will not be repeated here.

Those skilled in the art can understand that in the invention, some or all of the procedures of the battery swapping control method may be implemented by a computer program instructing relevant hardware. The computer program may be stored in a computer-readable storage medium. The computer program, when executed by a processor, may implement the steps of the foregoing method embodiments. The computer program includes computer program codes, and it can be understood that the program codes include, but are not limited to, a program code for executing the above-mentioned battery swapping control method. For ease of description, only the parts related to the invention are shown. The computer program code may be in the form of source code, object code, executable file, or some intermediate forms. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

In a third aspect, the invention provides a computer device, which includes a memory and a processor, where the memory is configured to store a plurality of program codes, and the program codes are configured to be loaded and run by the processor to execute the battery swapping control method according to any one of the foregoing.

It can be understood that the device encompasses all technical effects of the battery swapping control method according to any one of the foregoing, which will not be repeated here. The device may include a computer control device formed by various electronic devices.

In a fourth aspect, the invention provides a battery swapping control system, including a control module, the control module being configured to execute the battery swapping control method according to any one of the foregoing.

It can be understood that the computer-readable storage medium encompasses all technical effects of the battery swapping control method according to any one of the foregoing, which will not be repeated here.

In the description of the invention, the "control module" may include hardware, software, or a combination thereof. A module may include a hardware circuit, various suitable sensors, a communication port, and a memory, may also include a software part, for example, program codes, or may be a combination of software and hardware. The processor may be a central processing unit, a microprocessor, an image processor, a digital signal processor, or any other suitable processor. The processor has a data and/or signal processing function. The processor may be implemented in software, hardware, or a combination thereof. A non-transitory computer-readable storage medium includes any suitable medium that can store program codes, for example, a magnetic disk, a hard disk, an optical disc, a flash memory, a read-only memory, or a random access memory.

Further, it should be understood that, since the configuration of the control module is merely used for describing functional units of the system corresponding to the battery swapping control method of the invention, a physical device corresponding to the control module may be a processor itself, or part of software, part of hardware, or part of a combination of software and hardware in the processor. Therefore, the number of the control module being one is merely exemplary. It can be understood by those skilled in the art that the control module may be adaptively split based on actual conditions. A specific split form of the control module does not cause the technical solutions to depart from the principle of the invention. Therefore, all technical solutions after the split shall fall within the scope of protection of the invention.

Item 1. A battery swapping control method, including:
acquiring visual data of a vehicle for battery swapping,
where the visual data includes position data of battery holes of a traction battery of the vehicle for battery swapping;
on the basis of the position data of the battery holes, determining whether the position of the vehicle for battery swapping meets conditions for performing a battery swapping operation on the vehicle; and
if the position of the vehicle for battery swapping meets the conditions, a battery swap trolley performing the battery swapping operation on the vehicle for battery swapping.

Item 2. The battery swapping control method according to item 1, where the step of "on the basis of the position data of the battery holes, determining whether the position of the vehicle for battery swapping meets conditions for performing a battery swapping operation on the vehicle" includes:
in the event of deviations in the position data of the battery holes being all less than a set deviation threshold, determining that the position of the vehicle for battery swapping meets the conditions for performing the battery swapping operation on the vehicle.

Item 3. The battery swapping control method according to item 2, where the step of "on the basis of the position data of the battery holes, determining whether the position of the vehicle for battery swapping meets conditions for performing a battery swapping operation on the vehicle" includes:
in the event of at least one of the deviations in the position data of the battery holes being greater than or equal to the set deviation threshold, determining that the position of the vehicle for battery swapping does not meet the conditions for performing a battery swapping operation on the vehicle;
and if the position of the vehicle for battery swapping does not meet the conditions for performing the battery swapping operation on the vehicle, the control method includes:
   interrupting a current battery swapping operation; or
   selectively performing a secondary determination on the position of the vehicle for battery swapping, and on the basis of a result of the secondary determination, interrupting the current battery swapping operation or continuing the current battery swapping operation.

Item 4. The battery swapping control method according to item 3, where after the step of "acquiring visual data of a vehicle for battery swapping", the battery swapping control method includes:
determining whether the position data corresponding to the battery holes is valid data;
if the position data corresponding to the battery holes is not the valid data, during the process in which the battery locating pins of the battery swap trolley approach the battery holes, determining whether relative positions of the battery locating pins to the battery holes meet the conditions for performing the battery swapping operation on the vehicle for battery swapping.

Item 5. The battery swapping control method according to item 4, where the step of "determining whether the relative positions of the battery locating pins to the battery holes meet the conditions for performing the battery swapping operation on the vehicle for battery swapping" includes:
if the relative positions of the battery locating pins to the battery holes do not meet the conditions, continuing the movement of the battery locating pins of the battery swap trolley toward the battery holes, and determining whether the torque of the battery locating pins is greater than a set torque threshold; and
if the relative positions of the battery locating pins to the battery holes meet the conditions, providing feedback information and/or interrupting the current battery swapping operation;
where the torque threshold is a value lower than a set high value.

Item 6. The battery swapping control method according to item 4, where the step of "during the process in which the battery locating pins of the battery swap trolley approach the battery holes, determining whether the relative positions of the battery locating pins to the battery holes meet the conditions for performing the battery swapping operation on the vehicle for battery swapping" includes:
preliminarily determining whether the vehicle for battery swapping meets the conditions for battery swapping;
if the vehicle for battery swapping meets the conditions, moving the battery locating pins of the battery swap trolley to approach the battery holes, and then during the process in which the battery locating pins of the battery swap trolley approach the battery holes, determining whether the relative positions of the battery locating pins to the battery holes meet the conditions for performing the battery swapping operation on the vehicle for battery swapping.

Item 7. The battery swapping control method according to item 6, where the step of "preliminarily determining whether the vehicle for battery swapping meets the conditions for battery swapping" includes:
moving a plurality of vehicle body locating pins of the battery swap trolley to approach corresponding holes of a vehicle body of the vehicle for battery swapping; and
if all of the plurality of vehicle body locating pins are capable of entering the holes, then preliminarily determining that the vehicle for battery swapping meets the conditions for battery swapping.

Item 8. The battery swapping control method according to item 7, where the step of "all of the plurality of vehicle body locating pins being capable of entering the holes" includes:
the torque of the plurality of vehicle body locating pins during the process of entering the holes being less than or equal to a preset torque threshold.

Item 9. A computer-readable storage medium, including a memory, the memory being configured to store a plurality of program codes, where the program codes are configured to be loaded and run by a processor to execute the battery swapping control method according to any one of items 1 to 8.

Item 10. A computer device, including a memory and a processor, the memory being configured to store a plurality of program codes, where the program codes are configured to be loaded and run by the processor to execute the battery swapping control method according to any one of items 1 to 8.

Item 11. A battery swapping control system, including a control module, the control module being configured to execute the battery swapping control method according to any one of items 1 to 8.

### Brief Description of Drawings

Preferred implementations of the battery swapping control method of the invention will be described below with reference to the accompanying drawings, by taking a rail guided vehicle (RGV) as an example of a battery swap trolley. In the drawings:

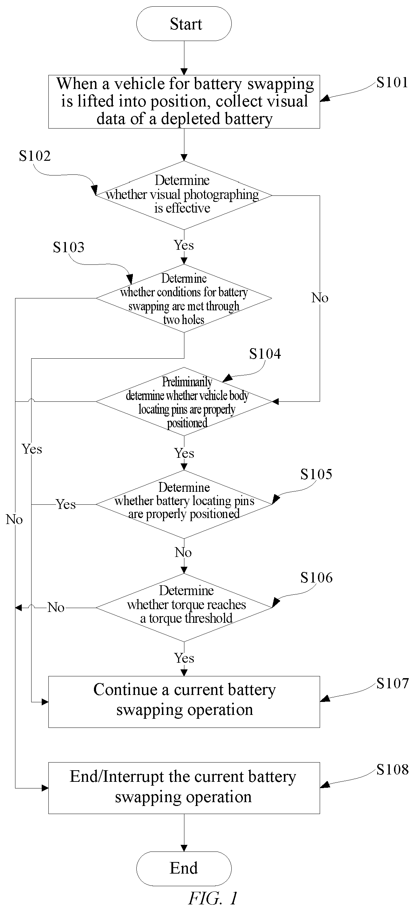

FIG. 1 is a schematic flowchart of a battery swapping control method according to an embodiment of the invention.

### Detailed Description of Embodiments

Preferred implementations of the invention will be described below with reference to the accompanying drawings. Those skilled in the art should understand that these implementations are merely used to explain the technical principles of the invention, and are not intended to limit the scope of protection of the invention.

It should be noted that in the description of the invention, the terms, such as "center", "upper", "lower", "left", "right", "vertical", "horizontal", "inner" and "outer", that indicate directions or positional relationships are based on the directions or positional relationships shown in the accompanying drawings only for the convenience of description, and do not indicate or imply that the device or element must have a specific orientation, be constructed and operated in a specific orientation, and therefore cannot be construed as a limitation to the invention. In addition, the terms "first" and "second" are used for descriptive purposes only, and cannot be construed as indicating or implying relative importance.

In addition, it should also be noted that, in the description of the invention, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the invention can be interpreted according to a specific situation.

In addition, for a better description of the invention, many details are provided in the following specific embodiments, and those skilled in the art should understand that, without some specific details, the invention can still be implemented. In some instances, the detailed structures, principles, and the like of functional units of a battery swap station well known to those skilled in the art are not described in detail to highlight the gist of the invention.

The basic functional units of the battery swap station mainly include a charging compartment, a battery swap platform and a battery swap trolley (such as an RGV). The charging compartment is capable of recharging depleted batteries to provide fully charged batteries that can be directly installed onto vehicles for battery swapping. The battery swapping process for a vehicle is as follows: after the vehicle for battery swapping arrives at the battery swap platform, the RGV removes a depleted battery from the vehicle (unlocking operation) and installs a fully charged battery onto the vehicle (locking operation).

To ensure the reliability of the battery swapping process, the following basic preparatory steps are necessary before the unlocking operation: the vehicle must first enter a neutral mode after a high-voltage system is disconnected, the vehicle must undergo four-wheel alignment, the tire pressure must be ensured to be within an acceptable range, and so on. If there are problems with these preparatory steps, the posture of the vehicle may be improper during the battery swapping process. After the preparatory steps are completed, the vehicle for battery swapping is lifted using a vehicle lift. Visual photographing is conducted to determine whether the positional accuracy of battery holes is within an allowable deviation range for the battery swapping operation and additionally check whether there are interference factors, such as obstructions, at locking and unlocking positions (near the battery holes). When the positional accuracy of the battery holes meets the conditions for performing the battery swapping operation, the RGV is moved to a working position, the battery locating pins on the RGV extend out, and then the RGV is lifted, so that the battery locating pins are lifted and inserted into battery holes of a depleted battery. Based on this, the depleted battery can be unlocked from the vehicle and transferred to the RGV for the unlocking operation. Subsequently, the locking operation is performed to install the fully charged battery, carried by the RGV, onto the vehicle.

Taking the unlocking operation as an example, a problem of abnormal lifting of the RGV may occur during the battery swapping process. The cause of the problem of abnormal lifting and associated safety hazards are described below based on a cause event of the invention.

In the cause event, an error logic of the visual photographing process is as follows: an error is reported when visual deviations of both a right-front battery hole and a left-rear battery hole exceed 10 mm. The visual deviations include visual deviations along an X-direction of the vehicle (vehicle length direction, i.e., forward or rearward deviation) and a Y-direction of the vehicle (vehicle width direction, i.e., leftward or rightward deviation). In the cause event, the deviation for the right-front battery hole is 3.779 mm to the right/10.959 mm to the rear (if either the rightward deviation or the rearward deviation exceeds 10 mm, it is considered that a visual deviation is greater than 10 mm). The deviation for the left-rear battery hole is 1.89 mm to the left/6.802 mm to the rear. As can be seen, in the cause event, only the deviation of the left-rear battery hole exceeds 10 mm, and therefore the battery swapping process continues.

As the torque of the RGV increases, the lifting torque of the vehicle lift decreases. Upon analysis, in the cause event, the lifting torque on the right side decreases less (since the battery locating pin on the left side does not enter the battery hole). Subsequently, because the battery locating pin on the left side is at the edge of the battery hole, it slides into the battery hole from the edge. As a result, the torque of both the vehicle lift and the RGV quickly return to normal. Since the torque of the RGV does not reach a torque threshold, no alarm or error signal is triggered.

As the battery locating pins slide into the battery holes, an engine hood of the vehicle for battery swapping begins to shake. The consequence of this shaking is that the front edge of the battery hole on the depleted battery is damaged. Additionally, at the time, a staff member is adding a windshield washer fluid at a battery swapping site, and the staff member sustains a minor head injury.

It can be seen that in this event, under the condition of an improper vehicle posture, the failure of the visual photographing determination and the irrational setting of the torque threshold of the RGV lead to the continued upward movement of locating pins of the RGV. This ultimately causes damage near the battery holes of the depleted battery and results in the shaking of the engine hood, which causes injury to the staff member.

Based on the above event, the invention is proposed.

Referring to FIG. 1, FIG. 1 is a schematic flowchart of a battery swapping control method according to an embodiment of the invention. In a possible implementation, the control method mainly includes the following steps.

At step S101, when the vehicle for battery swapping is lifted into position by the vehicle lift, visual data of the depleted battery is collected, for example, visual data of an area beneath the depleted battery is collected by means of visual photographing.

At step S102, it is determined whether the visual photographing is effective. If the visual photographing is effective, it proceeds to step S103, in which case visual data related to the battery swapping operation can be obtained, for example, position data of two battery holes (e.g., left-rear and right-front battery holes) of the depleted battery can be determined from the visual data. If the visual photographing is ineffective (e.g., if there is interference or obstructions such as water or mud at the positions corresponding to the battery holes), it proceeds to step S104.

At step S103, it is determined whether the conditions for battery swapping are met on the basis of the position data of the two battery holes in the visual data. If the conditions are not met, it proceeds to step S108; and if the conditions are met, it proceeds to step S107.

In this embodiment, it can be determined that the conditions for battery swapping are met if the deviation between the positions of the left-rear battery hole and the right-front battery hole and ideal positions thereof is less than a set threshold (e.g., still 10 mm). Otherwise, it is determined that the conditions for battery swapping are not met.

At step S104, before the unlocking operation of the battery locating pins of the RGV, it is preliminarily determined whether the battery locating pins are mechanically moved into position.

In a possible implementation, the preliminary determination is implemented as follows: two vehicle body locating pins of the RGV (e.g., the left-front vehicle body locating pin and the right-rear vehicle body locating pin) extend out to pin positions, the RGV raises the pin positions to a working position, and whether the vehicle body locating pins can enter the holes on a vehicle body (not on the depleted battery) is determined through the torque for the two vehicle body locating pins. If the vehicle body locating pins cannot enter the holes, it proceeds to step S108; and if the vehicle body locating pins can enter the holes, it is preliminarily determined that the vehicle body locating pins have actually entered the holes and the posture of the vehicle body is basically correct, so that the vehicle body locating pins are retracted, and it proceeds to step S105.

At step S105, the battery locating pins in the RGV that arrive at the working position are lifted, during the process of lifting the RGV, the positions of the battery locating pins are detected in real time, and it is determined whether the battery locating pins are properly positioned. If the battery locating pins are not properly positioned, it proceeds to step S106; and if the battery locating pins are properly positioned, it proceeds to step S107.

In a possible implementation, it can be determined whether the state in which the battery locating pins approach the battery holes is a proximity state in which the battery locating pins can be properly positioned, such as by using proximity sensors. The state of "properly positioned" should be: two sets of proximity sensors corresponding to the two battery locating pins are triggered simultaneously. Otherwise, it indicates that the battery locating pins are not properly positioned.

At step S106, the torque of the battery locating pins is monitored in real time, and it is determined whether the torque reaches a torque threshold. If the torque reaches the torque threshold, it proceeds to step S108; and if the torque does not reach the torque threshold, it proceeds to step S107.

Preferably, in this step, a more stringent torque protection function is invoked. Specifically, the torque threshold for the RGV corresponding to the battery locating pins is lowered to ensure that if the battery locating pins of the RGV push against positions on the depleted battery outside the battery holes, the current battery swapping operation can be interrupted.

At step S107, the current battery swapping operation is continued. For example, after the unlocking operation for removing the depleted battery is completed, the subsequent locking operation is performed to install a fully charged battery.

At step S108, if the battery swap station is an unattended station, the station can restore to a state before battery swapping, the current battery swapping operation is ended, and a vehicle owner is notified to drive away. On this basis, information can be provided to remind maintenance personnel to service the battery swap station. If the battery swap station is an attended station, an error is reported, the current battery swapping operation is halted, and the attendant will perform corresponding repairs. If the problem is resolved, the battery swapping operation can continue at the current working position.

Since visual data may also be inaccurate, at step S103, if the conditions for battery swapping are not met, the following changes can be made: a pop-up window appears on an interface (for example, when the battery swap station is attended), the visual data is inspected manually, a secondary determination is performed regarding the current deviation, and upon the determination that the battery swapping operation can proceed, the battery swapping operation continues.

It can be seen that in the control method of the invention, the probability of misjudgment in the step of visual data determination is reduced through a more stringent judgment mechanism. In the event of a visual data failure, the continuation of the battery swapping operation can be ensured through the preliminary determination based on the vehicle body locating pins and the secondary determination based on "properly positioned" detection. Moreover, in the step of the secondary determination, by lowering the torque threshold for the battery locating pins, it can be ensured that problems with "not properly positioned" can be found promptly, thereby avoiding safety risks such as the aforementioned damage to the depleted battery or injury to the staff if the battery swapping operation were to continue under such circumstances.

It should be noted that although the steps are described in a specific order in the foregoing embodiment, those skilled in the art can understand that in order to achieve the effects of the invention, different steps are not necessarily performed in this order, but may be performed simultaneously or in another order, or some steps may be added, replaced, or omitted. For instance, the preliminary determination mentioned above can be omitted, and only the "properly positioned" judgment mechanism based on the invoked torque protection function can be used.

It should be noted that, although an example in which the battery swapping control method formed in the foregoing specific manner is used for description, those skilled in the art can understand that the invention is not limited to this. In fact, users can flexibly adjust factors such as related steps and parameters in the related steps based on actual application scenarios, for example, the reduction in the torque threshold can be determined according to practical needs.

Heretofore, the technical solutions of the invention have been described with reference to the preferred implementations shown in the accompanying drawings. However, those skilled in the art can readily understand that the scope of protection of the invention is clearly not limited to these specific implementations. Without departing from the principles of the invention, those skilled in the art may make equivalent changes or replacements to related technical features. The technical solutions obtained after these changes or replacements fall within the scope of protection of the invention.

## Claims

1. A battery swapping control method, comprising:
acquiring visual data of a vehicle for battery swapping;
wherein the visual data comprises position data of battery holes of a traction battery of the vehicle for battery swapping;
on the basis of the position data of the battery holes, determining whether the position of the vehicle for battery swapping meets conditions for performing a battery swapping operation on the vehicle; and
if the position of the vehicle for battery swapping meets the conditions, a battery swap trolley performing the battery swapping operation on the vehicle for battery swapping.

2. The battery swapping control method according to claim 1, wherein the step of "on the basis of the position data of the battery holes, determining whether the position of the vehicle for battery swapping meets conditions for performing a battery swapping operation on the vehicle" comprises:
in the event of deviations in the position data of the battery holes being all less than a set deviation threshold, determining that the position of the vehicle for battery swapping meets the conditions for performing the battery swapping operation on the vehicle.

3. The battery swapping control method according to claim 2, wherein the step of "on the basis of the position data of the battery holes, determining whether the position of the vehicle for battery swapping meets conditions for performing a battery swapping operation on the vehicle" comprises:
in the event of at least one of the deviations in the position data of the battery holes being greater than or equal to the set deviation threshold, determining that the position of the vehicle for battery swapping does not meet the conditions for performing a battery swapping operation on the vehicle;
and if the position of the vehicle for battery swapping does not meet the conditions for performing the battery swapping operation on the vehicle, the control method comprises:
interrupting a current battery swapping operation; or
selectively performing a secondary determination on the position of the vehicle for battery swapping, and on the basis of a result of the secondary determination, interrupting the current battery swapping operation or continuing the current battery swapping operation.

4. The battery swapping control method according to claim 3, wherein after the step of "acquiring visual data of a vehicle for battery swapping", the battery swapping control method comprises:
determining whether the position data corresponding to the battery holes is valid data;
if the position data corresponding to the battery holes is not the valid data, during the process in which the battery locating pins of the battery swap trolley approach the battery holes, determining whether relative positions of the battery locating pins to the battery holes meet the conditions for performing the battery swapping operation on the vehicle for battery swapping.

5. The battery swapping control method according to claim 4, wherein the step of "determining whether the relative positions of the battery locating pins to the battery holes meet the conditions for performing the battery swapping operation on the vehicle for battery swapping" comprises:
if the relative positions of the battery locating pins to the battery holes do not meet the conditions, continuing the movement of the battery locating pins of the battery swap trolley toward the battery holes, and determining whether the torque of the battery locating pins is greater than a set torque threshold; and
if the relative positions of the battery locating pins to the battery holes meet the conditions, providing feedback information and/or interrupting the current battery swapping operation;
wherein the torque threshold is a value lower than a set high value.

6. The battery swapping control method according to claim 4, wherein the step of "during the process in which the battery locating pins of the battery swap trolley approach the battery holes, determining whether the relative positions of the battery locating pins to the battery holes meet the conditions for performing the battery swapping operation on the vehicle for battery swapping" comprises:
preliminarily determining whether the vehicle for battery swapping meets the conditions for battery swapping;
if the vehicle for battery swapping meets the conditions, moving the battery locating pins of the battery swap trolley to approach the battery holes, and then during the process in which the battery locating pins of the battery swap trolley approach the battery holes, determining whether the relative positions of the battery locating pins to the battery holes meet the conditions for performing the battery swapping operation on the vehicle for battery swapping.

7. The battery swapping control method according to claim 6, wherein the step of "preliminarily determining whether the vehicle for battery swapping meets the conditions for battery swapping" comprises:
moving a plurality of vehicle body locating pins of the battery swap trolley to approach corresponding holes of a vehicle body of the vehicle for battery swapping; and
if all of the plurality of vehicle body locating pins are capable of entering the holes, then preliminarily determining that the vehicle for battery swapping meets the conditions for battery swapping.

8. The battery swapping control method according to claim 7, wherein the step of "all of the plurality of vehicle body locating pins being capable of entering the holes" comprises:
the torque of the plurality of vehicle body locating pins during the process of entering the holes being less than or equal to a preset torque threshold.

9. A computer-readable storage medium, comprising a memory, the memory being configured to store a plurality of program codes, wherein the program codes are configured to be loaded and run by a processor to execute the battery swapping control method according to any one of claims 1 to 8.

10. A computer device, comprising a memory and a processor, the memory being configured to store a plurality of program codes, wherein the program codes are configured to be loaded and run by the processor to execute the battery swapping control method according to any one of claims 1 to 8.

11. A battery swapping control system, comprising a control module, the control module being configured to execute the battery swapping control method according to any one of claims 1-8.
